# EUROPEAN PATENT SPECIFICATION

(11) **EP 1 218 166 B1**
(45) Date of publication and mention of the grant of the patent: **20.08.2003**
(21) Application number: 00944515.6
(22) Date of filing: 14.06.2000
(51) Int. Cl.: B29C 49/70

(54) **THE MANUFACTURE OF A PLASTIC PRODUCT**
METHODE ZUM BLASFORMEN EINES KUNSTSTOFF-CONTAINERS
FABRICATION D'UN PRODUIT EN PLASTIQUE

(30) Priority: 16.06.1999 SE 9902257
(43) Date of publication of application: 03.07.2002
(73) Proprietor: HordaGruppen Vätterleden Aktiebolag, 330 15 Bor (SE)
(72) Inventor: LEJON, Lars, S-330 17 Rydaholm (SE)
(74) Representative: Lundin, Björn-Eric
(86) International application number: SE0001228
(87) International publication number: WO01002158

(56) References cited:
- WO-A-97/08976
- WO-A1-96/02168
- DE-U1- 29 817 897
- US-A- 4 886 443

## Description

This invention relates to a method for the manufacture of a non self-supporting plastic product that comprises a partially closed, inflatable essentially thin-walled container that includes an opening which is formed in a thicker material, such as to obtain a rigid container neck portion, said method comprising heating a soft and mouldable plastic material to a plastic state and blow-moulding said plastic in a cold mould tool, by injecting air through said opening from beneath. By thin-walled is meant in the present context a mean wall thickness of about 1 mm.

WO 96/02168 teaches a method of this kind for producing specific inflatable plastic elements, also called pneumatic elements, for basic furniture structures. According to this known method, a plastic material, such as EMA (ethyl methyl acrylate), EBA (ethyl butyl acrylate), EVA (ethyl vinyl acetate) and EEA (ethylene acetate), is heated to a temperature that imparts plastic properties, i.e. mouldable properties, to the plastic material. The heated material is introduced into a closeable blow mould in a blow-moulding device, such as a tube, and is blown to produce a thin-walled element whose shape corresponds to the geometry of said mould, by inserting a blow pipe into the tube from beneath. Upon completion of the blow-moulding process, the mould is opened and the blown product is removed from the mould while maintaining the blow pressure and, immediately upon removal from the mould, is blown further to a predetermined weak overpressure through the opening formed, with the aid of a blowing machine. The opening is then closed to retain the overpressure in said element over a longer time period. By way of example, the aforesaid document proposes a time period of 6-36 hours during which the element is held in an inflated state for cooling, curing and leakage tests, before it can be dismounted, emptied of air and packaged.

Because the proposed method leads to a number of complications, it has not been put into practical use. These complications are mainly experienced when manufacturing elements with which high demands are placed on dimension tolerances, since the final size and dimensions of the manufactured element are governed by the overpressure to which the element is subjected in conjunction with its removal from the blow mould, and because the slightest deviation from a given pressure will result in excessive deviation from the desired dimensions of the element.

The method also requires an extremely large space in which the inflated elements can be stored for a period of up to 36 hours.

It has now surprisingly been found that the problems associated with the method defined in the introduction can be solved effectively by means of the present invention. Accordingly, one object of the present invention is to solve the serious problems that have, in principle, prevented the manufacture of thin-walled elements by blow moulding, at least when close dimension tolerances are required.

This object is achieved with a method comprising the steps set forth in the accompanying Claims. According to the invention, the element is blow moulded to a predetermined final shape in the tool or mould through said opening and the process then terminated. The blow moulded container is removed from the tool whilst gripped by an upper and a lower pair of forks positioned at a fixed distance from each other, and is turned through 180° with the aid of the forks whilst holding the forks fixed in a vertical direction. The interior of the container is thus in communication with the surroundings during this operation, through the opening through which air was blown during the blow-moulding process. One pair of forks grips the container around a rigid neck portion formed at the opening in the blow moulding process, while the other pair of forks grips around the tube immediately above the moulded container and pinches around said container such as to form a withdrawing projection on the side of the container opposite from the opening. A conveyor-carried gripping device is inserted into the opening, by lifting the container towards the device with the aid of the forks with the container still in a fixed position, so that the gripping device will enter the opening. The gripping device functions to grip internally in the opening by virtue of the resistance exerted by the rigid neck portion. The grip exerted by the two pairs of forks around the container, i.e. around its neck portion and said lower withdrawing projection respectively, is loosened and the container is then caused to cool to a temperature at which the plastic material in the container passes from a plastic state to an elastic state with the container held by and freely hanging from said device, prior to releasing the container from said device and packaging the container.

Suitably, the container is tested for leakage by inflating said container to a predetermined pressure prior to releasing the container from said device.

To facilitate removal of the container from the mould and to avoid sticking and adherence of the container to respective forks, at least those parts of the forks that come into contact with the container will preferably be cooled, suitably with water although alternatively with gas or some other coolant.

The container is secured to its respective gripping device, suitably, and easiest, by means of an inflatable ring comprised of rubber or some similar material, which is deflated when the container is to be removed from the device for packaging purposes.

The invention will now be described in more detail with reference to a preferred practical embodiment of a method of manufacture.

A powder mixture that contains polymer material, preferably polyethylene mixed with polymerised methyl acrylate (MA) is worked in an extruder whilst heated to a temperature of about 150°C, there being formed a continuous tube that has a diameter of about 135 mm and a wall thickness of 2-4 mm. The extruded tube is fed from above into a blow-moulding tool that includes a blowpipe at its lower end. The tool is cooled internally to a temperature of not greater than 15°C during the entire operation with water. Alternatively, nitrogen or some other suitable coolant may be used to this end. Air is blown into the mould at a pressure of about 8-9 bar, therewith inflating the tube to the geometry governed by the mould. When moulding is completed, the mould is opened and two pairs of forks are caused to engage the tube immediately above and beneath the moulded container, wherewith the bottom pair of forks grip a rigid neck portion of the container formed by the mould around the opening in the lower part of the moulded container at the location of the blow pipe. The pair of forks continues to grip around said neck portion until the container shall be released. The second pair of forks grip, at the same time, that part of the tube that has not been shaped in the blowing process and therewith forms on the container a withdrawing projection that can be gripped by said pair of forks until the container shall be released therefrom.

The container is lifted away from the blowpipe and removed whilst gripped by the two pairs of forks in the aforedescribed manner. As soon as the container has been lifted away from the blowpipe, the opening into which the blowpipe was inserted into the container is exposed to the surroundings and the pressure in the container interior will be in equilibrium with atmospheric or ambient pressure from then on. The distance between the pairs of forks is held constant during the entire operation, therewith ensuring that the container will be held stably and fixed as it is removed from the mould so as to prevent any changes in dimensions taking place as a result of the overpressure in the container or as a result of gravitational influences.

The pairs of forks are rotated through 180° so as to turn the container upside down with said opening facing upwards as the container is lifted out of the mould and up towards a conveyor path. Suspended equidistantly along the conveyor path are a number of so-called pin-like gripping devices that are normally in the form of hollow tubular elements. The container opening, which is now positioned at the top of the container, is threaded onto one such gripping-up device and an inflatable rubber ring carried by said device is inflated so as to grip inside the opening in the rigid neck portion of the container therewith enabling the device to support the container in a freely suspended attitude when releasing the grip of the fork pairs. The container is then transported by the conveyor path whilst suspended freely from said device and subjected to natural cooling from the surroundings over a period of about 60 min. The container is then inflated by passing air through the tubular device to a pressure of about 1 bar and then subjected to a series of leakage tests. The container is then released and allowed to fall to a lower level, where it is folded-up and packaged.

## Claims

1. A method for manufacturing a non self-supporting plastic product that comprises a partially closed, inflatable essentially thin-walled container that has an opening in a wall of greater thickness than the remainder of the container, therewith providing a rigid neck portion, wherein a soft and mouldable plastic material is heated to a plastic state and blow-moulded in a cool moulding tool to a predetermined final shape by injecting air through said opening from beneath, **characterised by**, removing the blow-moulded container from the tool whilst gripped by an upper and a lower pair of forks disposed at a fixed distance apart; turning the container through 180° with the aid of said pairs of forks during continued fixation of said forks in a vertical direction; introducing a conveyor-carried gripping device into the opening formed in the rigid neck portion of the container during the moulding process and causing said device to grip internally in said opening; releasing the grip of the two fork pairs on said container; and causing the container to cool to a temperature at which the plastic container material has passed from a plastic to an elastic state with the container held by and suspended from said device, prior to removing the container from said device and packaging the container.

2. A method according to Claim 1, **characterised by** inflating the container to a predetermined pressure for leakage test purposes prior to removing the container from said device.

3. A method according to Claim 1 or 2, **characterised by** cooling the pairs of forks preferably with water, at least at those parts that come into contact with the container.

4. A method according to any one of Claims 1-3, **characterised by** securing the container to the device by means of an inflatable ring made of rubber or some other suitable material.

## Patentansprüche

1. Verfahren zur Herstellung eines nichtselbsttragenden Kunststoffproduktes, das einen teilweise geschlossenen, aufblasbaren, im wesentlichen dünnwandigen Behälter umfasst, welcher in einer Wand größerer Dicke als der Rest des Behälters eine Öffnung hat und damit einen starren. Halsabschnitt liefert, worin ein weiches und formbares Kunststoffmaterial zu einem plastischen Zustand erhitzt und in einem kalten Formwerkzeug zu einer vorbestimmten Endform durch Einspritzen von Luft durch die Öffnung von unten blasgeformt wird; **dadurch gekennzeichnet, dass** man den blasgeformten Behälter aus dem Werkzeug entfernt, während er von einem oberen und einem unteren Paar Gabeln ergriffen wird, die in einem feststehenden Abstand voneinander angeordnet sind, den Behälter mit Hilfe dieser Paare von Gabeln während fortgesetzter Fixierung der Gabeln in einer vertikalen Richtung über 180° dreht, eine von einer Fördereinrichtung getragene Greifeinrichtung in die Öffnung einführt, die in dem starren Halsabschnitt des Containers während des Formverfahrens gebildet wurde, und diese Vorrichtung dazu bringt, in der Öffnung innen zu greifen, den Griff der beiden Gabelpaare auf dem Behälter freigibt und den Behälter dazu bringt, auf eine Temperatur abzukühlen, bei welcher das Kunststoffbehältermaterial von einem plastischen in einen elastischen Zustand übergeht, wobei der Behälter an der Vorrichtung hängend gehalten wird, bevor man den Behälter aus der Vorrichtung entfernt und den Behälter verpackt.

2. Verfahren nach Anspruch 1, **dadurch gekennzeichnet, dass** man den Behälter bis zu einem vorbestimmten Druck für Leckagetestzwecke aufbläst, bevor man ihn aus der Vorrichtung entfernt.

3. Verfahren nach Anspruch 1 oder 2, **dadurch gekennzeichnet, dass** man die Paare von Gabeln vorzugsweise mit Wasser wenigstens an den Teilen kühlt, die mit dem Behälter in Berührung kommen.

4. Verfahren nach einem der Ansprüche 1 bis 3, **dadurch gekennzeichnet, dass** der Behälter an der Vorrichtung mit Hilfe eines aufblasbaren Ringes aus Gummi oder irgendeinem anderen geeigneten Material befestigt wird.

## Revendications

1. Méthode pour fabriquer un produit en plastique non autoportant qui comprend un récipient à paroi mince essentiellement gonflable et partiellement fermé lequel possède une ouverture sur une paroi de plus grande épaisseur que le reste du récipient, fournissant en outre une partie rigide dû col, où une matière plastique déformable et molle est chauffée jusqu'à atteindre l'état plastique et moulée par soufflage dans un outil de moulage à froid avec la forme finale prédéterminée de l'outil en injectant de l'air à travers ladite ouverture supérieure, **caractérisée en ce que** le récipient moulé par soufflage est retiré de l'outil pendant qu'il est fixé par une paire de fourches supérieures et inférieures disposées à une distance fixée à part; **que** le récipient est tourné à 180° à l'aide desdites paires de fourches pendant la fixation continue desdites fourches en direction verticale; qu'un dispositif de fixation supportant un convoyeur est introduit au niveau de l'ouverture formée dans la partie rigide du col du récipient pendant le procédé de moulage et que ledit dispositif est amené à se fixer internement dans ladite ouverture; **que** la fixation des deux paires de fourches est débloquée dudit récipient; et **que** le récipient est refroidi à une température à laquelle la matière plastique du récipient passe d'un état plastique à un état élastique avec le récipient qui est tenu et suspendu par ledit dispositif, avant de retirer le récipient dudit dispositif et de l'emballer.

2. Procédé selon la revendication 1, **caractérisé en ce que** le récipient est gonflé à une pression prédéterminée pour tester l'étanchéité avant de retirer le récipient dudit dispositif.

3. Procédé selon la revendication 1 ou 2, **caractérisé en ce que** les paires de fourches sont préférablement refroidies avec de l'eau, au moins au niveau des parties qui entrent en contact avec le récipient.

4. Méthode selon n'importe laquelle des revendications 1-3, **caractérisée en ce que** le récipient est arrimé au dispositif moyennant un anneau gonflable fait de caoutchouc ou d'autres matériaux adéquats.
